# EUROPÄISCHE PATENTSCHRIFT

(11) **EP 0 640 369 B1**
(45) Veröffentlichungstag und Bekanntmachung des Hinweises auf die Patenterteilung: **28.05.1997**
(21) Anmeldenummer: 94111360.7
(22) Anmeldetag: 21.07.1994
(51) Int. Cl.: B01D 27/08

(54) **Flüssigkeitsfilter**
Liquid filter
Filtre de liquide

(30) Priorität: 09.08.1993 DE 4326651
(43) Veröffentlichungstag der Anmeldung: 01.03.1995
(60) Teilanmeldung: 96110435.3
(73) Patentinhaber: ROBERT BOSCH GMBH, 70442 Stuttgart (DE)
(72) Erfinder: Projahn, Ulrich, Dipl.-Ing., E-28109 El Soto, Madrid (ES); Lucas, Bernhard, Dipl.-Ing., E-28034 Madrid (ES); Straubel, Max, Dipl.-Ing., D-70329 Stuttgart (DE)

(56) Entgegenhaltungen:
- DE-A- 2 231 896
- DE-A- 2 262 356
- DE-A- 3 210 795
- DE-C- 3 625 764

## Beschreibung

### Stand der Technik

Die Erfindung geht aus von einem Flüssigkeitsfilter nach der im Oberbegriff des Anspruchs 1 näher angegebenen Gattung.

Es ist schon ein solches Flüssigkeitsfilter zum Reinigen von Kraftstoff aus der DE 32 10 795 C2 bekannt, das als Durchlauffilter mit am Gehäuse entgegengesetzt angeordneten Anschlußstutzen ausgebildet ist und in seinem Inneren einen radial durchströmten Sterneinsatz aufnimmt. Die Abdichtung zwischen der Schmutz- und der Reinseite im Inneren des Gehäuses wird von einem O-Ring übernommen, der einerseits am Außenumfang einer Endkappe und andererseits an der zylindrischen Innenwand eines becherförmigen Gehäuseteils anliegt. Bei diesem Filter kann es nun von Nachteil sein, daß zum Zentrieren, Abdichten und Haltern des Sterneinsatzes im Gehäuseinneren die beiden stirnseitigen Endkappen sowie das becherförmige Gehäuseteil und der Deckel in besonderer Weise ausgeformt sein müssen. Dies führt zu einer relativ aufwendigen und dementsprechend kostspieligen Bauweise. Außerdem ist diese Abdichtung mit O-Ring empfindlich gegen Gehäuseverformungen, wie sie im Crash-Fall auftreten können, was leicht zu Undichtheiten zwischen Schmutz- und Reinseite führen kann.

Auch führt die Abdichtung an dem relativ großen Außendurchmesser des Filtereinsatzes zu einer kostspieligen Bauweise. Obwohl hier neben einer radialen Fixierung auch eine begrenzte axiale Festlegung des Sterneinsatzes im Gehäuse möglich ist, kann bei ungünstigen axialen Toleranzen der Fall eintreten, daß der Filtereinsatz im Gehäuse in axialer Richtung sich bewegen kann oder es kann eine unerwünscht große Kraft auf die Gehäuseteile ausgeübt werden, wenn der Filtereinsatz bei der Montage des Filters zu sehr zusammengedrückt werden muß.

Ferner ist aus der DE-A-22 31 896 ein Flüssigkeitsfilter bekannt, bei dem zum Ausgleich von axialen Toleranzen ein radial durchströmter Sterneinsatz von einem zentral angeordneten Rohr zentriert und über zwei gleiche, ringförmige Dicht- und Federelemente im Filtergehäuse abgestützt ist, wobei eine radiale und axiale Abdichtung erreicht wird. Diese Dichtelemente aus elastomerem Werkstoff, zum Beispiel Gummi, bestehen jeweils aus einem ringförmigen Grundkörper, von dem stirnseitig eine schräg nach außen verlaufende, konische Dichtlippe absteht. Die Dichtelemente stützen sich mit ihren Dichtlippen an den beiden stirnseitigen Endkappen des Sterneinsatzes dichtend ab, während die Grundkörper im Gehäuseboden und Deckel satt anliegen und zudem vom Rohr zentriert werden. Für die Federwirkung zum axialen Toleranzausgleich sind hier zwei Dichtelemente vorgesehen, die relativ aufwendig und groß bauen und ein durchgehendes Rohr zur Zentrierung erfordern.

Weiterhin ist aus der DE-A-36 25 764 ein Flüssigkeitsfilter bekannt, bei dem ein Sterneinsatz mit seiner einen, zentral offenen Endkappe in einen Formdichtring eingeknöpft ist, der auf einen Anschlußstutzen aufgeschoben ist. Ein axialer Toleranzausgleich mit Hilfe eines Dichtelements ist hier nicht vorgesehen.

### Vorteile der Erfindung

Das erfindungsgemäße Flüssigkeitsfilter mit den kennzeichnenden Merkmalen des Hauptanspruchs hat demgegenüber den Vorteil, daß es eine relativ einfache und kostengünstige Bauweise ermöglicht. So übernimmt der Formdichtring beim Einbau des Sterneinsatzes in das Gehäuse mehrere Funktionen, nämlich diejenige der Zentrierung, der Abdichtung sowie der Abstandshalterung und schafft zudem eine Druckmittelverbindung, was eine platzsparende und montagefreundliche Bauweise begünstigt. Ferner lassen sich bisherige Bauelemente weitgehend weiterverwenden. Ferner ist diese Befestigung und Abdichtung des Sterneinsatzes im Gehäuse relativ unempfindlich gegen Gehäuseverformungen und erfüllt deshalb hohe Sicherheitsanforderungen bei Crash-Tests. Vor allem können axiale Fertigungstoleranzen der Bauelemente in stärkerem Maße als bisher ausgeglichen werden, so daß insbesondere erhöhte Kräfte auf die Gehäuseverbindung zwischen Gehäuseteil und Deckel sicher vermieden werden. Für die axiale Festlegung des Filtereinsatzes sind keine zusätzlichen Federelemente erforderlich. Bei der Montage des Flüssigkeitsfilters können vormontierte Einsätze verwendet werden; ein Klebeprozeß mit Erwärmung ist in der Filterfertigung nicht mehr nötig. Auch kann auf die Fettfreiheit von Bauelementen, wie sie beim Einkleben des Filtereinsatzes erforderlich ist, verzichtet werden.

Durch die in den Unteransprüchen aufgeführten Maßnahmen sind vorteilhafte Weiterbildungen und Verbesserungen des im Hauptanspruch angegebenen Flüssigkeitsfilters möglich. Eine besonders zweckmäßige Ausführungsform mit einem Gehäuse aus Kunststoff ergibt sich gemäß Anspruch 5. Ferner ist es vorteilhaft, das Flüssigkeitsfilter gemäß Anspruch 7 mit einem Metallgehäuse auszubilden. Weitere vorteilhafte Ausgestaltungen ergeben sich aus den übrigen Ansprüchen, der Beschreibung sowie der Zeichnung.

### Zeichnung

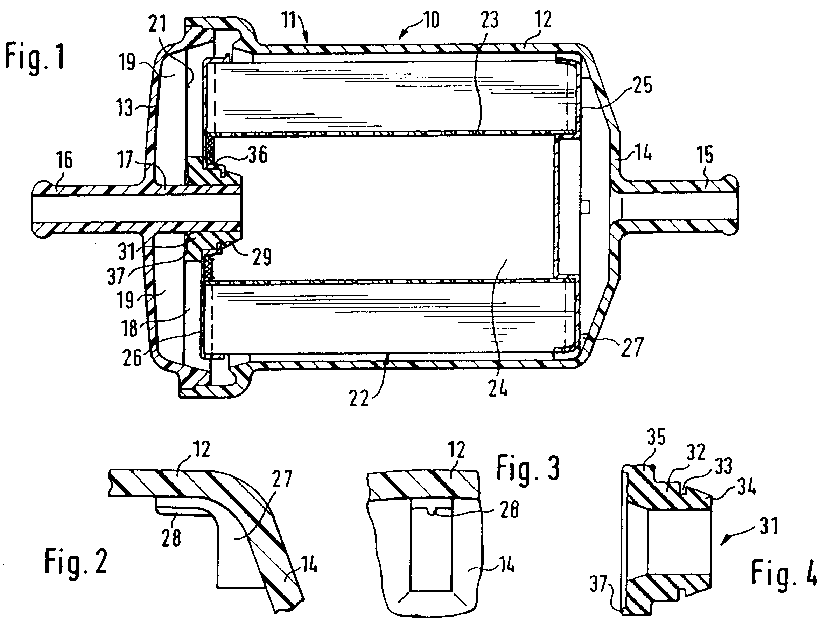

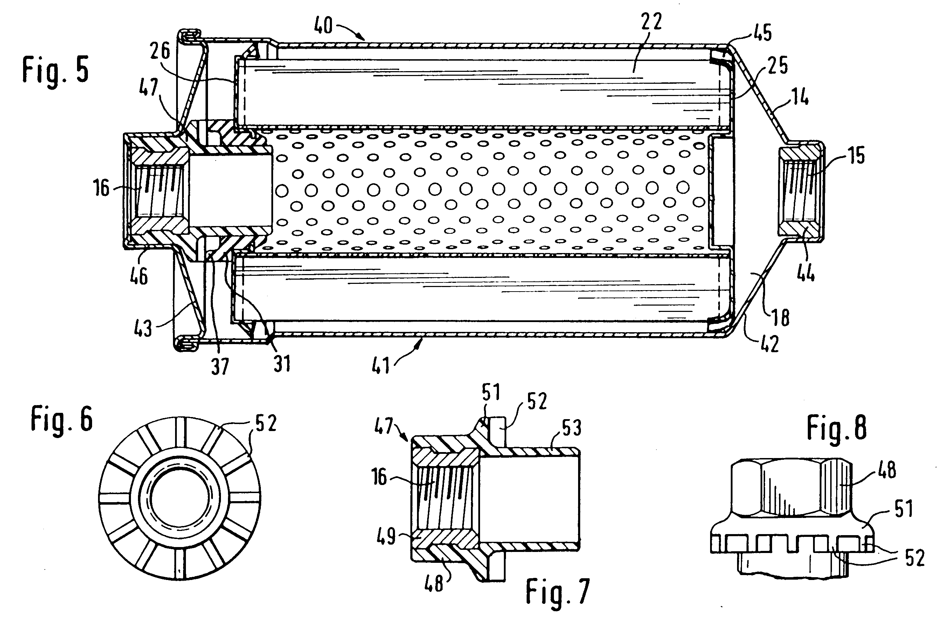

Drei Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel eines Flüssigkeitsfilters in vereinfachter Darstellung, die Figuren 2 und 3 als Einzelheit und in vergrößertem Maßstab die Ausbildung eines Sockels im becherförmigen Gehäuseteil beim Filter nach Figur 1, Figur 4 einen Längsschnitt durch den Formdichtring nach Figur 1 in vergrößertem Maßstab, Figur 5 einen Längsschnitt durch ein zweites Ausführungsbeispiel des Flüssigkeitsfilters und die Figuren 6, 7 und 8 als Einzelteil und in vergrößertem Maßstab einen im Deckel des Filters nach Figur 5 eingesetzten Stopfen.

### Beschreibung der Ausführungsbeispiele

Die Figur 1 zeigt einen Längsschnitt durch ein Flüssigkeitsfilter 10 in vereinfachter Darstellung, das zum Reinigen von Kraftstoff dient. Das Flüssigkeitsfilter 10 hat ein Gehäuse 11, das aus einem im wesentlichen becherförmigen Gehäuseteil 12 und einem Deckel 13 besteht, die an ihren Rändern dicht und fest miteinander verbunden sind. Beide Gehäuseteile 12, 13 bestehen aus Kunststoff, so daß sich ihre Ränder vorzugsweise durch Verschweißen mittels Ultraschall verbinden lassen. An einem Boden 14 des Gehäuseteils 12 ist zur Bildung eines Anschlusses zentral ein erster Anschlußstutzen 15 ausgebildet. Am Deckel 13 liegt koaxial zum ersten Anschlußstutzen 15 ein zweiter Anschlußstutzen 16, so daß das Flüssigkeitsfilter 10 in an sich bekannter Weise als Leitungsfilter ausgebildet ist. Am Deckel 13 erstreckt sich in Verlängerung des zweiten Anschlußstutzens 16 ein Rohrstutzen 17, welcher in einen Innenraum 18 des Gehäuses 11 ragt. Zwischen diesem Rohrstutzen 17 und dem äußeren Rand des Deckels 13 verlaufen radial nach außen und sternförmig angeordnete Stege 19, welche einerseits die Festigkeit des Deckels 13 erhöhen und andererseits eine Auflagefläche 21 bilden.

Im Innenraum 18 des Gehäuses 11 ist als Filterelement ein radial durchströmter Sterneinsatz 22 angeordnet, der eine im Prinzip an sich bekannte Bauweise hat. Der Sterneinsatz 18 weist ein Mittelrohr 23 auf, das aus Siebblech besteht und eine zylindrische Kammer 24 begrenzt. Um das Mittelrohr 23 ist sternförmig als Filtermaterial eine Papierbahn angeordnet, deren stirnseitige Kanten mit einer ersten (25) bzw. zweiten Endkappe 26 dicht verklebt sind. Die erste Endkappe 25, die hier im wesentlichen als durchgehende Scheibe ausgebildet ist, verschließt dabei eine zentrale, mittlere Öffnung an der rechten Stirnseite des Sterneinsatzes 22 und begrenzt somit die Kammer 24. Im Gehäuseteil 12 sind im Bereich des Bodens 14 an dessen Innenseite vier, gleichmäßig längs des Umfangs verteilte Sockel 27 angebracht, deren Ausbildung im einzelnen aus den Figuren 2 und 3 näher erkennbar ist. Auf diesen im Gehäuseteil 12 angespritzten Sockeln 27 stützt sich der Sterneinsatz 22 mit seiner ersten Endkappe 25 in axialer Richtung ab, wobei die Sockel 27 zugleich für eine radiale Führung sorgen. Dabei sind in vorteilhafter Weise zur Vermeidung eines Radialspiels kleine Rippen 28 mit Dreiecksquerschnitt an den Sockeln 27 so angebracht und ausgebildet, daß sie in Richtung des Bodens 14 konisch zulaufen. Damit wird erreicht, daß der Sterneinsatz beim Einsetzen festgeklemmt wird. Die Rippen 28 sind dabei so ausgeführt, daß sie sich verformen können.

Die in Figur 1 an der linken Stirnseite des Sterneinsatzes 22 liegende, zweite Endkappe 26 weist einen mittig liegenden, kreisrunden Durchlaß 29 auf, welcher der mittleren zentralen Öffnung zur Kammer 24 im Sterneinsatz 22 zugeordnet ist. In diesem Durchlaß 29 ist ein im wesentlichen hülsenförmiger Formdichtring 31 aus Gummi dicht und fest eingebaut, wie er in Figur 4 als Einzelteil und in vergrößertem Maßstab dargestellt ist. An diesem Formdichtring 31 geht ein hohlzylindrischer Abschnitt 32 über eine außenliegende Ringnut 33 in einen konischen Abschnitt 34 über, während andererseits am hohlzylindrischen Abschnitt 32 ein ringförmiger Flansch 35 mit größerem Durchmesser anschließt. Der Formdichtring 31 ist mit seinem hohlzylindrischen Abschnitt 32 in einem rohrförmigen Abschnitt 36 der zweiten Endkappe 26 zentriert und geführt. Ferner ist der Formdichtring 31 mit seiner Ringnut 33 in den kreisrunden Rand des Durchlasses 29 eingeknöpft. Der hülsenförmige Formdichtring 31 ist auf den frei in den Innenraum 17 ragenden Rohrstutzen aufgesteckt, so daß eine radial wirkende Dichtung zwischen Schmutz- und Reinseite erreicht wird. Ferner ist an dem Formdichtring 31 aus Gummi stirnseitig am Flansch 35 ein ringförmig umlaufender Wulst 37 ausgebildet, mit dem er sich in der Auflagefläche 21 auf den Stegen 19 abstützt. In zweckmäßiger Weise wird somit einerseits Axialspiel vermieden und andererseits die von innen auf den Deckel 13 wirkende Kraft so gering wie möglich gehalten, da es der nachgiebige Wulst 37 gestattet, die fertigungsbedingten axialen Toleranzen bei minimaler Gegenkraft aufzunehmen. Durch den Wulst 37 sind somit am Formdichtring 31 Mittel ausgebildet, welche zum Ausgleich der axialen Toleranzen dienen.

Der Formdichtring 31 aus Gummi übernimmt somit eine Vielzahl von Funktionen, insbesondere diejenige der Abdichtung, der Zentrierung und der Abstandshalterung bei minimaler Gegenkraft und stellt dabei zusätzlich noch eine Druckmittelverbindung im Zusammenhang mit dem Rohrstutzen 17 her. Dies begünstigt eine platzsparende und kostengünstige Bauweise, wobei bisher vorhandene Bauelemente weitgehend weiter verwendet werden können. Die Ausbildung und Anordnung des elastischen Formdichtrings 31 hat darüberhinaus den Vorteil, daß das Flüssigkeitsfilter 10 auf diese Weise hohe Anforderungen bei einem Crash-Test erfüllen kann.

Die Wirkungsweise des Flüssigkeitsfilters 10 ist wie folgt: Der zu reinigende Kraftstoff strömt in der Regel über den ersten Anschlußstutzen 15 in den Innenraum 18 des Gehäuses 11, wobei er zwischen der Innenwand des Gehäuseteils 12 und die davon im Abstand gehalterte Endkappe 25 zwischen den Sockeln 27 hindurchströmt. Der Kraftstoff durchströmt radial von außen nach innen den Sterneinsatz 22 und gelangt schließlich gereinigt von der Kammer 24 über den Rohrstutzen 17 zum zweiten Anschlußstutzen 16. Der elastische Formdichtring 31 übernimmt dabei neben seinen Halte- und Stützfunktionen auch die Funktion der Abdichtung zwischen Schmutz- und Reinseite im Inneren des Gehäuses 11.

Die Figur 5 zeigt einen Längs schnitt durch einen zweiten Flüssigkeitsfilter 40, der sich vom ersten Flüssigkeitsfilter 10 nach Figur 1 wie folgt unterscheidet, wobei für gleiche Bauelemente gleiche Bezugszeichen verwendet werden.

Beim Flüssigkeitsfilter 40 nach Figur 5 besteht das Gehäuse 41 aus Metall, wozu das becherförmige Gehäuseteil 42 und der Deckel 43 jeweils als Tiefziehteile ausgebildet sind und an ihren Rändern miteinander dicht verbördelt sind. Im Gehäuseteil 42 ist an dessen Boden 14 anstelle eines Anschlußstutzens ein Gewindering 44 zur Bildung des ersten Anschlusses 15 vorgesehen. Da das Gehäuseteil 42 als metallisches Tiefziehteil ausgebildet ist, entfallen die Sockel zur axialen Abstützung, während dafür die erste Endkappe 25 an ihrem Außenumfang gleichmäßig verteilt mehrere Führungsnocken 45 aufweist, welche diese Funktion übernehmen.

Im Deckel 43 des metallischen Gehäuses 41 ist eine im Querschnitt sechseckförmige Vertiefung 46 ausgebildet, in die ein passender Stopfen 47 aus Kunststoff eingesetzt ist. Der Stopfen 47 ist als Einzelheit und in vergrößertem Maßstab in den Figuren 6, 7 und 8 dargestellt, wonach in einem Sechskantabschnitt 48 des Stopfens 47 zur Bildung des zweiten Anschlusses 16 eine Gewindemutter 49 eingespritzt ist. An den Sechskantabschnitt 48 schließt sich ein Bund 51 mit radial verlaufenden Stegen 52 sowie ein Rohrstutzen 53 an, auf welchen der Formdichtring 31 aufgesteckt ist. Der Formdichtring 31 stützt sich mit seinem elastischen, ringförmigen Wulst 37 auf den radial verlaufenden Stegen 52 des Stopfens 47 ab und bildet dabei die Mittel zum axialen Ausgleich von Toleranzen.

Der mit seinem Sechskantabschnitt 48 in die Vertiefung 46 des Deckels 43 eingesetzte Stopfen 47 dichtet zugleich den Innenraum 18 des Gehäuses 41 nach außen hin ab.

Die Funktion und Wirkungsweise des zweiten Flüssigkeitsfilters 40 entsprechen sinngemäß derjenigen des ersten Flüssigkeitsfilters 10 nach Figur 1. Auch beim zweiten Flüssigkeitsfilter 40 mit metallischem Gehäuse 41 kann ein vormontierter Filtereinsatz 22 ohne zusätzliche Federelemente zur axialen Halterung und ohne zusätzliche Klebeprozesse in der Filterfertigung eingebaut werden. Dabei übernimmt der Formdichtring 31 wiederum eine Vielzahl von Funktionen, wobei eine radiale Abdichtung auf relativ kleinem Durchmesser erfolgt und ein axialer Toleranzausgleich bei minimaler Gegenkraft mit Hilfe des ringförmigen Wulstes 37 erreicht wird, der nur stellenweise und örtlich begrenzt auf den Stegen 52 aufliegt und infolge seiner Nachgiebigkeit fertigungsbedingte Toleranzen ausgleichen kann.

## Patentansprüche

1. Flüssigkeitsfilter, insbesondere für Kraftstoffe, mit einem einen radial durchströmten Sterneinsatz aufnehmenden Gehäuse, das aus einem becherförmigen Gehäusteil und einem damit unlösbar verbundenen Deckel besteht, die zur Bildung eines Leitungsfilters jeweils stirnseitig und zentrisch im Gehäuse liegende Anschlüsse aufweisen und bei dem die beiden stirnseitigen Kanten des Sterneinsatzes in zwei Endkappen dicht befestigt sind, von denen eine erste Endkappe eine mittig liegende Öffnung zum Innenraum des Filtereinsatzes verschließt, während die zweite Endkappe einen dem Innenraum zugeordneten Durchlaß aufweist und an ihr ein Schmutz- und Reinseite trennendes, radial wirkendes Dichtelement anliegt und bei dem der Sterneinsatz mit seiner ersten Endkappe axial im Gehäuse abgestützt ist, dadurch gekennzeichnet, daß das Dichtelement als ein im wesentlichen hülsenförmiger Formdichtring (31) aus elastischem Material ausgebildet ist, der in dem Durchlaß (29) der zweiten Endkappe (26) dicht und fest angeordnet ist, daß an einem Anschluß (16) ein in den Innenraum des Gehäuses (11, 41) ragender Rohrstutzen (17, 53) ausgebildet ist, an dem der radial abdichtende Formdichtring (31) befestigt ist, so daß der Anschluß (16) mit der Innenkammer (24) des Filtereinsatzes (22) verbunden ist und daß am Formdichtring (31) axiale Toleranzen ausgleichende Mittel (37) angeordnet sind, wobei diese Mittel einen stirnseitig am Formdichtring (31) angeordneten Ringwulst (37) aufweisen, der sich über radial verlaufende Stege (19, 52) an der Innenwand des Gehäuses (11, 42), insbesondere des Deckels (13, 43) abstützt.

2. Flüssigkeitsfilter nach Anspruch 1, dadurch gekennzeichnet, daß als elastisches Material für den Formdichtring (31) Gummi verwendet wird.

3. Flüssigkeitsfilter nach Anspruch 1, dadurch gekennzeichnet, daß als elastisches Material für den Formdichtring (31) ein relativ weicher Kunststoff, insbesondere Viton, verwendet wird.

4. Flüssigkeitsfilter nach einem der Ansprüche 1 bis 3, dadurch gekennzeichnet, daß der Formdichtring (31) einen Abschnitt (32, 34) mit außenliegender Ringnut (33) aufweist, mit welchem er in der zweiten Endkappe (26) in den kreisförmig verlaufenden Rand des Durchlasses (29) eingeknöpft ist.

5. Flüssigkeitsfilter nach einem oder mehreren der Ansprüche 1 bis 4, dadurch gekennzeichnet, daß das Gehäuse (11) aus Kunststoff besteht und dessen becherförmiges Gehäuseteil (12) nahe dem Boden (14) liegende, zur axialen Abstützung des Sterneinsatzes (22) dienende Sockel (27) aufweist, an denen zum radialen Einspannen der Endkappe (25) dienende Rippen (28) angeordnet sind.

6. Flüssigkeitsfilter nach Anspruch 5, dadurch gekennzeichnet, daß die auf der Innenseite des Deckels (13) verlaufenden Stege (19) sich im wesentlichen über dessen ganzen Durchmesser erstrecken.

7. Flüssigkeitsfilter nach einem oder mehreren der Ansprüche 1 bis 4, dadurch gekennzeichnet, daß das Gehäuse (41) aus Metall besteht und der Deckel (43) in einer Vertiefung (46) einen Stopfen (47) verdrehgesichert aufnimmt, an dem der in den Innenraum (18) des Gehäuses (41) ragende Rohrstutzen (53) und die radialen Stege (52) ausgebildet sind.

8. Flüssigkeitsfilter nach Anspruch 7, dadurch gekennzeichnet, daß der Deckel (43) eine im Querschnitt sechskantförmige Vertiefung (46) aufweist und der Stopfen (47) aus Kunststoff mit eingelagerter Mutter (49) besteht, und der Außensechskant (48) des Stopfens (47) an die Vertiefung (46) angepaßt ist.

9. Flüssigkeitsfilter nach Anspruch 7 oder 8, dadurch gekennzeichnet, daß an der ersten Endkappe (25) außen radiale Führungsnocken (45) angeordnet sind, die den Filtereinsatz (22) im Gehäuse (41) zentrieren und axial abstützen.

## Claims

1. Liquid filter, especially for fuels, with a housing which accommodates a radial-flow star-shaped insert and comprises a cap-shaped housing part and a cover which is connected nonreleasably to the latter, these components each having, for the formation of a line filter, connections situated at the end and centrally in the housing, and in which the two end edges of the star-shaped insert are secured leaktightly in two end caps, a first end cap of which closes a centrally situated opening leading to the interior of the filter insert while the second end cap has an aperture associated with the interior, and a radially acting sealing element which separates the dirty side from the clean side rests against the said end cap, and in which the star-shaped insert is supported axially in the housing by means of its first end cap, characterized in that the sealing element is constructed as an essentially sleeve-shaped preshaped sealing ring (31) of flexible material which is arranged leaktightly and firmly in the aperture (29) in the second end cap (26), in that a tubular stub (17, 53) which projects into the interior of the housing (11, 41) and on which the radially sealing preshaped sealing ring (31) is secured is formed on a connection (16), so that the connection (16) is connected to the inner chamber (24) of the filter insert (22), and in that means (37) which compensate for axial tolerances are arranged on the preshaped sealing ring (31), these means having an annular bead (37) which is arranged on the end of the preshaped sealing ring (31) and is supported by way of radially extending webs (19, 52) against the inner wall of the housing (11, 42), in particular the cover (13, 43).

2. Liquid filter according to Claim 1, characterized in that rubber is used as the flexible material for the preshaped sealing ring (31).

3. Liquid filter according to Claim 1, characterized in that a relatively soft plastic, especially Viton, is used as the flexible material for the preshaped sealing ring (31).

4. Liquid filter according to one of Claims 1 to 3, characterized in that the preshaped sealing ring (31) has a section (32, 34) with an external annular groove (33), by means of which it is fitted in the second end cap (26), in the circular rim of the aperture (29).

5. Liquid filter according to one or more of Claims 1 to 4, characterized in that the housing (11) is composed of plastic and its cup-shaped housing part (12) has pedestals (27) which lie close to the bottom (14), which serve to provide axial support for the star-shaped insert (22) and on which ribs (28) serving for the radial clamping of the end cap (25) are arranged.

6. Liquid filter according to Claim 5, characterized in that the webs (19) extending on the inside of the cover (13) extend essentially over the entire diameter of the latter.

7. Liquid filter according to one or more of Claims 1 to 4, characterized in that the housing (41) is composed of metal, and the cover (43) accommodates a plug (47) in a manner secured against rotation in a depression (46), the tubular stub (53) which projects into the interior (18) of the housing (41) and the radial webs (52) being formed on this plug.

8. Liquid filter according to Claim 7, characterized in that the cover (43) has a depression (46) of hexagonal cross-section and the plug (47) is composed of plastic with an embedded nut (49), and the external hexagon (48) of the plug (47) is matched to the depression (46).

9. Liquid filter according to Claim 7 or 8, characterized in that radial guide bosses (45) which centre and provide axial support for the filter insert (22) in the housing (41) are arranged on the outside of the first end cap (25).

## Revendications

1. Filtre pour liquide, en particulier pour du carburant, avec un boîtier qui reçoit une cartouche en étoile traversée radialement par le liquide, boîtier qui se compose d'une partie de boîtier en forme de cuve et d'un couvercle relié de façon inamovible à celle-ci, qui présentent pour former un filtre à écoulement continu des raccords se trouvant respectivement du côté frontal et au centre dans le boîtier et grâce auquel les deux bords, situés des côtés frontaux, de la cartouche en étoile sont fixés de façon étanche dans deux chapeaux terminaux, dont l'un, le premier chapeau terminal, obture un orifice se trouvant au centre vers l'intérieur de la cartouche de filtre, tandis que le second chapeau terminal présente un orifice de passage associé à la chambre intérieure et prend appui sur un élément d'étanchéité, qui sépare le côté propre du côté sale et agit radialement et grâce auquel la cartouche en étoile prend appui par son premier chapeau terminal axialement dans le boîtier,
caractérisé en ce que
l'élément d'étanchéité est constitué sous la forme d'une bague d'étanchéité moulée (31) en une matière élastique, sensiblement en forme de manchon, qui est disposée dans l'orifice de passage (29) du second chapeau terminal (26) de façon étanche et fixe,
en ce que
sur un raccord (16) est constitué un ajutage tubulaire (17, 53) pénétrant à l'intérieur du boîtier (11, 41), ajutage tubulaire sur lequel est fixé la bague d'étanchéité moulée (31) assurant radialement l'étanchéité, de telle sorte que le raccord (16) est relié à la chambre intérieure (24) de la cartouche du filtre (22) et
en ce que
des moyens servant à compenser des jeux axiaux sont disposés sur la bague d'étanchéité moulée (31), ces moyens présentant un bourrelet annulaire (37), disposé du côté frontal sur la bague d'étanchéité moulée (31), qui prend appui au moyen de nervures (19, 52), s'étendant radialement, sur la paroi intérieure du boîtier (11, 42), en particulier du couvercle (13, 43).

2. Filtre pour liquide selon la revendication 1,
caractérisé en ce qu'
on utilise comme matière élastique pour la bague d'étanchéité moulée (31) du caoutchouc.

3. Filtre pour liquide selon la revendication 1,
caractérisé en ce qu'
on utilise comme matière élastique pour la bague d'étanchéité moulée (31) une matière plastique relativement molle, en particulier du viton.

4. Filtre pour liquide selon l'une des revendications 1 à 3,
caractérisé en ce que
la bague d'étanchéité moulée (31) présente une section (32, 34) avec une rainure annulaire se trouvant à l'extérieur, par laquelle elle est boutonnée dans le deuxième chapeau terminal (26) dans le bord de l'orifice de passage (29) qui s'étend de façon circulaire

5. Filtre pour liquide selon une ou plusieurs des revendications 1 à 4,
caractérisé en ce que
le boîtier (11) est en matière plastique et sa partie de boîtier (12) en forme de cuve présente des pieds (27) qui se trouvent à proximité du fond (14), qui servent à l'appui axial de la cartouche en étoile (22), pieds sur lesquels sont disposés des nervures (28) servant à enserrer radialement le chapeau terminal (25).

6. Filtre pour liquide selon la revendication 1,
caractérisé en ce que
les nervures qui s'étendent sur le côté intérieur du couvercle (13) s'étendent sensiblement sur tout son diamètre.

7. Filtre pour liquide selon une ou plusieurs des revendications 1 à 4,
caractérisé en ce que
le boîtier (41) est en métal et le couvercle (43) reçoit dans un renfoncement (46) un bouchon (47) bloqué en rotation, sur lequel sont constitués un ajutage tubulaire (53) pénétrant dans la chambre intérieure (18) du boîtier (41) et les nervures radiales (52).

8. Filtre pour liquide selon la revendication 7,
caractérisé en ce que
le couvercle (43) présente un renfoncement de forme hexagonale en section transversale et le bouchon (47) est en matière plastique avec un écrou encastré (49), et l'hexagone (48) du bouchon (47) est ajusté sur le renfoncement (46).

9. Filtre pour liquide selon la revendication 7 ou 8,
caractérisé en ce que
des mentonnets de guidage (45) radiaux extérieurement sont disposés sur le premier chapeau terminal (25), mentonnets qui centrent la cartouche de filtre (22) dans le boîtier (41) et la soutiennent axialement.
